(19) Europäisches Patentamt

European Patent Office

Office européen des brevets

(11) **EP 1 217 758 A2**

(12) **EUROPÄISCHE PATENTANMELDUNG**

(43) Veröffentlichungstag:
  **26.06.2002 Patentblatt 2002/26**

(51) Int Cl.7: **H04B 1/40**, H04B 1/48

(21) Anmeldenummer: **01000742.5**

(22) Anmeldetag: **12.12.2001**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(30) Priorität: **19.12.2000  DE 10063244**

(71) Anmelder: **SIEMENS AKTIENGESELLSCHAFT**
  **80333 München (DE)**

(72) Erfinder:
  • **Herzberg, Ralf**
    **47918, Tönisvorst (DE)**
  • **Nagel, Jörg**
    **47800, Krefeld (DE)**

(54) **Antennenschalter eines Kommunikationsendgerätes**

(57)  Beschrieben wird ein Kommunikationsendgerät mit einer Sendeeinrichtung, einer der Sendeeinrichtung nachgeschalteten Antenne und einer zwischen der Sendeeinrichtung und der Antenne angeordneten Schalteinrichtung. Zwischen der Sendeeinrichtung und der Schalteinrichtung ist eine Sperr-Schaltungsanordnung angeordnet, welche für einen bestimmten Frequenzbereich einen eingangsseitigen hochohmigen Abschluss für die Schalteinrichtung bildet.

FIG 1

**Beschreibung**

Die Erfindung betrifft ein Kommunikationsendgerät gemäß den Merkmalen des Oberbegriffs des Anspruch 1.

Üblicherweise dient in derartigen Kommunikationsendgeräten, wie beispielsweise Mobiltelefonen, die Schalteinrichtung dazu, sowohl die Sendeeinrichtung als auch eine Empfangseinrichtung auf die gleiche Antenne zu schalten. Bei sogenannten multibandfähigen Endgeräten, beispielsweise Dualband-Mobiltelefonen, die sowohl im GSM-Band 900 MHz als auch im GSM-Band 1800 MHz arbeiten, werden derartige Antennenschalter auch benutzt, um die verschiedenen Sendeeinrichtungen bzw. die Ausgänge der entsprechenden Sendeverstärker und die verschiedenen Empfängereinrichtungen auf eine gemeinsame Antenne zu schalten. Je mehr verschiedene Sendeeinrichtungen und Empfängereinrichtungen auf die Antenne geschaltet werden, desto umfangreicher und komplizierter wird zwangsläufig auch die Schalteinrichtung, was mit einem entsprechenden Platzbedarf einhergeht. Da auf der anderen Seite eine zunehmende Miniaturisierung der Geräte gewünscht ist, sollten möglichst auch die einzelnen Komponenten derartiger Geräte und somit auch die Schalteinrichtungen möglichst klein ausgeführt sein, oder falls möglich, Komponenten zusammengefasst werden.

In der deutschen Offenlegungsschrift DE 198 42 706 A1 ist ein Mehrband-Antennenschalter dargestellt, bei dem über einen gemeinsamen Schalter Sende- bzw. Empfangseinrichtungen für verschiedene Frequenzbänder mit der Antenne verbindbar sind. Mittels geeigneter Filter oder Sperr-Schaltungsanordnungen wird ein in jedem Frequenzband spektral reines Signal gewährleistet. Dazu befindet sich eine solche Sperranordnung in jedem der Zweige, die zu einer Sende- bzw. Empfangseinrichtung führen. Nachteilig ist also hieran, dass das Einsparen an Schaltern mit einem Mehraufwand bei den Sperr-Schaltungsanordnungen bezahlt wird.

Eine prinzipielle technische Möglichkeit jedoch, die benötigten Schaltfunktionen in einer Schalteinrichtung mit geringem Platzbedarf zu realisieren, wäre die Verwendung von Halbleiterschaltern. Derartige Halbleiterschalter bestehen im Wesentlichen aus Hochfrequenztransistoren, die als Längsschalter, das heißt in Reihe in den jeweiligen Signalpfad geschaltet, den betreffenden Signalpfad trennen oder schließen. Ungünstigerweise weisen die derzeit zur Verfügung stehenden Halbleiterschalter jedoch eine relativ große Nichtlinearität auf. Aufgrund dieser Nichtlinearität erzeugen die Schalter, selbst bei einem spektral reinen Eingangssignal, unerwünschte Oberwellen. Diese Oberwellen stellen wiederum ein besonderes Problem bei Multiband-Mobiltelefonen dar, bei denen eine Oberwelle des einen Sendebands in ein anderes Sendeband fällt. Eine solche im Schalter erzeugte Oberwelle kann durch nachgeschaltete Filter nicht mehr unterdrückt werden, da ein solcher Filter auch das an sich gewünschte Signal des anderen Sendebands unterdrücken würde. Dieses Problem besteht zum Beispiel insbesondere in den heute üblichen Dualband-Mobiltelefonen, die sowohl im GSM 900 als auch im GSM 1800 arbeiten, da die erste harmonische Oberwelle $2f_0$ des GSM 900-Bands ($f_0$ liegt hier bei 900 MHz) genau in das GSM 1800-Band fällt. Aufgrund der unzureichenden Linearität wurde daher bisher der Einsatz von Halbleiterschaltern für die Antennenbeschaltung in Kommunikationsendgeräten sehr erschwert, weil beispielsweise wie im oben erwähnten Dokument für Schalter allgemein beschrieben, ein Mehraufwand bei den teuren Filtern bzw. Sperr-Schaltungsanordnungen erforderlich ist.

Daraus ergibt sich für die vorliegende Erfindung die Aufgabe, eine Schaltungsanordnung zum Verbinden von Sendebzw. Empfangseinheiten mit einer gemeinsamen Antenne anzugeben, bei der die Anzahl der Filter oder Sperr-Schaltungsanordnungen reduziert werden kann.

Diese Aufgabe wird durch ein Kommunikationsendgerät gemäß Anspruch 1 gelöst.

Erfindungsgemäß befindet sich bei einem solchen Kommunikationsendgerät zwischen dem Ausgang einer ersten Sendeeinrichtung, welche in einem ersten Frequenzbereich arbeitet, und der Schalteinrichtung, d. h. im Sendezweig vor der Schalteinrichtung, eine Sperr-Schaltungsanordnung, welche für einen zweiten Frequenzbereich einen eingangsseitigen hochohmigen Abschluss für die Schalteinrichtung bildet. Die Wirkung der Sperr-Schaltungsanordnung ist dabei die, dass am Eingang der Schalteinrichtung für den betreffenden Frequenzbereich als Quellimpedanz ein Leerlauf anliegt. Die Sperr-Schaltungsanordnung unterdrückt folglich den von der Schalteinrichtung erzeugten Stromfluss in der betreffenden Frequenz bzw. dem Frequenzbereich und reduziert somit auch die am Ausgang der Schalteinrichtung bzw. an der Antenne verfügbare Leistung im unerwünschten Frequenzbereich. Auf diese Weise kann eine in der Schalteinrichtung selbst erzeugte, unerwünschte Oberwelle unterdrückt werden, indem die vorgeschaltete Sperr-Schaltungsanordnung genau so eingestellt ist, dass sie den Frequenzbereich (Oberwellenbereich) der unerwünschten Oberwellen (z.B. der ersten harmonischen Oberwellen) des von der Sendeeinrichtung ausgegebenen Grundwellenbereichs unterdrückt.

Eine derartige Anordnung hat besondere Vorteile in den bereits eingangs erwähnten Multiband-Kommunikationsendgeräten, welche sowohl eine erste als auch zumindest eine weitere Sendeeinrichtungen aufweisen, wobei die Sendeeinrichtungen jeweils in verschiedenen Frequenzbereichen arbeiten und über die Schalteinrichtung mit derselben Antenne verbunden sind und wobei die Oberwellen des Frequenzbereichs der ersten Sendeeinrichtung in den Bereich der weiteren Sendeeinrichtung(en)fallen. In diesem Fall ist die Sendeeinrichtung, deren Oberwellen in das Frequenzband der weiteren Sendeeinrichtung(en)fallen würden, über die erfindungsgemäße Sperr-Schaltungsanordnung mit der Schalteinrichtung verbunden, so dass die in der Schalteinrichtung erzeugten unerwünschten Oberwellen unterdrückt werden. Da die Sperr-Schaltungsanordnung eingangsseitig von der Schalteinrichtung angeordnet ist, hat sie auf die von der bzw. den weiteren Sendeeinrichtung(en)erzeugten Signale, auch wenn diese im Oberwellenbereich der ersten Sendeeinrichtung liegen, keine unerwünschten leistungsunterdrückenden Wirkungen.

Die Schalteinrichtung kann daher aus einfachen, kostengünstigen und kleinen Halbleiterschaltern aufgebaut sein, wobei diese Halbleiterschalter vorzugsweise aus Hochfrequenztransistoren, beispielsweise in PHEMT (Pseudo morphic High Electron Mobility Transistor) GaAs-Technik aufgebaut sein können.

Die Beschaltung einer Schalteinrichtung mit der erfindungsgemäßen Sperr-Schaltungsanordnung kann darüber hinaus aber auch bei einer Verwendung anderer Schalter und zum Ausfiltern anderer störender Frequenzen, als den in einer Schalteinrichtung erzeugten Oberwellen, nützlich sein.

Die Sperr-Schaltungsanordnung ist bei einem einfachen bevorzugten Ausführungsbeispiel als Sperrkreis aus einer Induktivität und einer parallel dazu geschalteten Kapazität aufgebaut. Dieser Sperrkreis ist in Reihe zwischen die Sendeeinrichtung und die Schalteinrichtung, bzw. den für die jeweilige Sendeeinrichtung vorgesehenen Eingang der Schalteinrichtung, angeordnet.

Alternativ sind auch andere Realisierungen der Sperr-Schaltungsanordnungen möglich. Besonders preisgünstig ist beispielsweise ein Aufbau der Komponenten der Sperr-Schaltungsanordnung in Stripline-Technik. Außerdem können auch fertig konfektionierte Bauteile, beispielsweise Resonatoren aus Keramik oder dergleichen, verwendet werden. Derartige Keramikresonatoren sind besonders platzsparend.

Die Erfindung wird im Folgenden unter Hinweis auf die beigefügten Figuren anhand eines Ausführungsbeispiels näher erläutert. Es stellen dar:

Figur 1 ein schematisches Schaltbild einer erfindungsgemäßen Beschaltung einer Antenne eines Mobilfunkgeräts mit zwei Sendeeinrichtungen und zwei zugehörigen Empfangseinrichtungen,

Figur 2 eine graphische Darstellung der Oberwellenleistung $2f_0$ am Ausgang einer Schalteinrichtung, welche eingangsseitig erfindungsgemäß über eine durchstimmbare Sperr-Schaltungsanordnung mit einer Sendeeinrichtung verbunden ist.

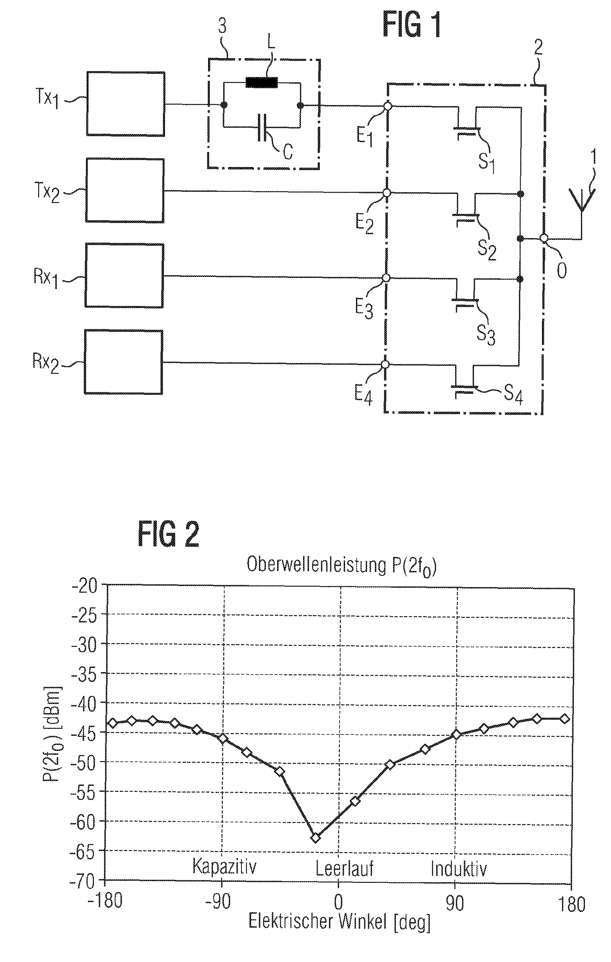

Bei dem in Figur 1 dargestellten Ausführungsbeispiel handelt es sich um die Beschaltung einer Antenne 1 mit zwei Sendeeinrichtungen $Tx_1$, $Tx_2$, von denen eine Sendeeinrichtung $Tx_1$ im GSM-Band 900 MHz und die zweite Sendeeinrichtung $Tx_2$ im GSM-Band 1800 MHz arbeitet. Außerdem ist die Antenne 1 mit entsprechenden Empfängereinrichtungen $Rx_1$, $Rx_2$ für die beiden GSM-Bänder beschaltet. Die Schalteinrichtung 2 selbst weist vier Eingänge $E_1$, $E_2$, $E_3$, $E_4$ auf, an denen die Sendeeinrichtungen $Tx_1$, $Tx_2$ und Empfangseinrichtungen $Rx_1$, $Rx_2$ angeschlossen sind. Außerdem weist die Schalteinrichtung 2 einen Ausgang O auf, an dem die Antenne 1 angeschlossen ist. Intern besteht die Schalteinrichtung 2 im Wesentlichen aus vier separaten Halbleiterschaltern $S_1$, $S_2$, $S_3$, $S_4$, die aus in PHEMT GaAs-Technik aufgebauten Hochfrequenztransistoren bestehen. Alternativ können auch andere Halbleiterschalter verwendet werden. Diese einzelnen Halbleiterschalter $S_1$, $S_2$, $S_3$, $S_4$ liegen jeweils zwischen den einzelnen Eingängen $E_1$, $E_2$, $E_3$, $E_4$ und dem gemeinsamen Ausgang O und trennen oder schließen als Längsschalter den jeweiligen Signalpfad zwischen den Eingängen $E_1$, $E_2$, $E_3$, $E_4$ und dem Ausgang O der Schalteinrichtung 2.

Erfindungsgemäß ist zwischen dem Ausgang der im GSM-Band 900 MHz arbeitenden ersten Sendeeinrichtung $Tx_1$ und dem zugehörigen Eingang $E_1$ der Schalteinrichtung 2 ein Sperrkreis 3 geschaltet, welcher in Form einer Parallelschaltung einer Induktivität L (beispielsweise einer Spule) und einer Kapazität C (beispielsweise einem Kondensator) realisiert ist. Ohne diesen Sperrkreis würde im Schalter $S_1$ der Schalteinrichtung 2 eine unerwünschte Oberwelle $2f_0$ der Arbeitsfrequenz $f_0$ der ersten Sendeeinrichtung $Tx_1$ erzeugt und an die Antenne 1 weitergeleitet werden. Da es sich im vorliegenden Ausführungsbeispiel bei $f_0$ um einen Frequenzbereich um 900 MHz handelt, würde dieser Oberwellenbereich $2f_0$ bei ca. 1800 MHz liegen. Dieser Frequenzbereich ist im vorliegenden Ausführungsbeispiel aber identisch mit dem Arbeitsbereich der zweiten Sendeeinrichtung $Tx_2$. Eine Unterdrückung der durch den Schalter $S_1$ erzeugten Oberwellen ausgangsseitig vom Schalter $S_1$ wäre daher nicht möglich, da eine Filterung an dieser Stelle auch das von der zweiten Sendeeinrichtung $Tx_2$ ausgesendete, gewünschte Signal unterdrücken würde.

Um die unerwünschte Oberwelle zu unterdrücken, wird daher der Sperrkreis 3 auf die Parallelresonanz:

$$2f_0 = \frac{1}{2 \cdot \pi \cdot \sqrt{L \cdot C}}$$

abgestimmt. Im vorliegenden Ausführungsbeispiel werden konkret für eine Abstimmung auf $2f_0 = 1800$ MHz die Werte $L = 4{,}7$ nH und $C = 1{,}66$ pF gewählt. Es sind aber auch andere geeignete Kombinationen von Werten für L und C möglich.

Der Sperrkreis 3 ist damit auf den zu unter-

drückenden Oberwellenbereich um $2f_0$ abgestimmt und der Eingang $E_1$ der Schalteinrichtung 2 "sieht" einen Leerlauf als Quellimpedanz für diesen Frequenzbereich. Der Sperrkreis 3 unterdrückt daher den vom Schalter $S_1$ erzeugten Stromfluss im Frequenzbereich um $2f_0$, wodurch auch die am Ausgang O verfügbare Leistung im unerwünschten Oberwellenbereich erheblich reduziert wird. Da dieser Sperrkreis 3 vor dem Schalter $S_1$ angeordnet ist, hat der Sperrkreis 3 keinerlei Auswirkungen auf das von der Sendeeinrichtung $Tx_2$ abgegebene Signal im Bereich $2f_0$.

Im vorliegenden Ausführungsbeispiel ist lediglich die erste harmonische Oberwelle der Sendefrequenz $f_0$ der ersten Sendeeinrichtung $Tx_1$ störend. Daher wird nur dieser Frequenzbereich durch den Sperrkreis 3 unterdrückt. Es ist aber auch möglich, weitere Oberwellen durch entsprechende zusätzliche Sperrkreise zu unterdrücken. Ebenso ist es möglich, zwischen den Eingang $E_2$ und die zweite Sendeeinrichtung $Tx_2$ entsprechende Sperrkreise zu schalten.

Figur 2 zeigt die Wirkung einer erfindungsgemäßen Beschaltung des Eingangs der Schalteinrichtung 2 mit einer Sperrkreis-Anordnung. Zur Erzeugung dieser Grafik wurde an den Eingang $E_1$ statt des in Figur 1 dargestellten Sperrkreises eine durchstimmbare Impedanz geschaltet, um die Abhängigkeit der Oberwellenunterdrückung vom Abschluss des Eingangs $E_1$ bei der Frequenz $2f_0$ zu demonstrieren. Aufgetragen ist jeweils die Oberwellenleistung $P(2f_0)$ in dBm am Ausgang O der Schalteinrichtung 2. Es zeigt sich hier deutlich, dass der verwendete Halbleiterschalter seine geringste Oberwellenleistung $P(2f_0)$ erst durch den erfindungsgemäßen Abschluss des Eingangs $E_1$ erreicht, d.h. genau dann, wenn die eingangsseitige Schaltungsanordnung einen Leerlauf für $2f_0$ darstellt.

**Patentansprüche**

1. Kommunikationsendgerät

   - mit einer ersten Sendeeinrichtung ($Tx_1$), welche in einem ersten Frequenzbereich arbeitet, und mindestens einer zweiten Sendeeinrichtung ($Tx_2$), welche in einem zweiten Frequenzbereich arbeitet,
   - einer den Sendeeinrichtungen ($Tx_1$, $Tx_2$) nachgeschalteten Antenne (1) und
   - einer zwischen der Sendeeinrichtung ($Tx_1$) und der Antenne (1) angeordneten Schalteinrichtung (2),

   **dadurch gekennzeichnet**,

   - dass über einen ersten Schalter ($S_1$) der Schalteinrichtung (2) die erste Sendeeinrichtung ($Tx_1$) mit der Antenne (1) verbindbar ist,
   - dass und über einen zweiten Schalter ($S_2$) der

Schalteinrichtung (2) die zweite Sendeeinrichtung ($Tx_2$) mit der Antenne (1) verbindbar ist,
   - und dass zwischen der ersten Sendeeinrichtung ($Tx_1$) und der Schalteinrichtung (2) eine Sperr-Schaltungsanordnung (3) für den zweiten Frequenzbereich angeordnet ist.

2. Kommunikationsendgerät nach Anspruch 1, **dadurch gekennzeichnet, dass** die Sendeeinrichtung ($Tx_1$) in einem ersten Frequenzbereich arbeitet und die Sperr-Schaltungsanordnung (3) einen hochohmigen Abschluss für einen zweiten Frequenzbereich bildet, welcher im Bereich von Oberwellen von Frequenzen des ersten Frequenzbereichs liegt.

3. Kommunikationsgerät nach einem der Ansprüche 1 oder 2, mit einer ersten Empfangseinrichtung $Rx_1$ und mindestens einer weiteren Empfangseinrichtung $Rx_2$, **dadurch gekennzeichnet, dass** die erste Empfangseinrichtung $Rx_1$ über einen dritten Schalter ($S_3$) der Schalteinrichtung (2) mit der Antenne 1 verbindbar ist und die weitere Empfangseinrichtung $Rx_2$ über einen vierten Schalter ($S_4$) mit der Antenne (1) verbindbar ist.

4. Kommunikationsendgerät nach einem der Ansprüche 1 bis 3, **dadurch gekennzeichnet, dass** die Schalteinrichtung (2) einen Halbleiterschalter ($S_1$, $S_2$, $S_3$, $S_4$) umfasst.

5. Kommunikationsendgerät nach Anspruch 4, **dadurch gekennzeichnet, dass** der Halbleiterschalter ($S_1$, $S_2$, $S_3$, $S_4$) einen Hochfrequenztransistor umfasst.

6. Kommunikationsendgerät nach einem der Ansprüche 1 bis 5, **dadurch gekennzeichnet, dass** die Sperr-Schaltungsanordnung (3) eine Kapazität (4) und eine dazu parallel geschaltete Induktivität (5) aufweist, welche als Sperrkreis zwischen der Sendeeinrichtung ($Tx_1$) und der Schalteinrichtung (2) angeordnet sind.

7. Kommunikationsendgerät nach einem der Ansprüche 1 bis 6, **dadurch gekennzeichnet, dass** die Komponenten der Sperr-Schaltungsanordnung als Striplinekomponenten ausgebildet sind.

8. Kommunikationsendgerät nach einem der Ansprüche 1 bis 7, **dadurch gekennzeichnet, dass** die Sperr-Schaltungsanordnung einen Resonator aufweist.

FIG 1

FIG 2

Oberwellenleistung $P(2f_0)$